# EUROPÄISCHE PATENTSCHRIFT

(11) **EP 2 291 895 B1**
(45) Veröffentlichungstag und Bekanntmachung des Hinweises auf die Patenterteilung: **13.04.2016**
(21) Anmeldenummer: 09769361.8
(22) Anmeldetag: 26.06.2009
(51) Int. Cl.: H02H 7/30, H02H 1/00

(54) **VERFAHREN ZUM SELEKTIVEN AUSLÖSEN VON LEISTUNGSSCHALTERN IM FALLE EINES KURZSCHLUSSES**
METHOD FOR SELECTIVELY TRIGGERING CIRCUIT BREAKERS IN THE EVENT OF A SHORT CIRCUIT
PROCÉDÉ DE DÉCLENCHEMENT SÉLECTIF DE DISJONCTEURS EN CAS DE COURT-CIRCUIT

(30) Priorität: 27.06.2008 DE 102008030987
(43) Veröffentlichungstag der Anmeldung: 09.03.2011
(73) Patentinhaber: Siemens Aktiengesellschaft, 80333 München (DE)
(72) Erfinder: MEYER, Jörg, 01309 Dresden (DE); SCHEGNER, Peter, 01259 Dresden (DE)
(86) Internationale Anmeldenummer: PCT/EP2009/058061
(87) Internationale Veröffentlichungsnummer: WO 2009/156513

(56) Entgegenhaltungen:
- WO-A-2006/108860
- GB-A- 2 348 554

## Beschreibung

Die Erfindung betrifft ein Verfahren zum selektiven Auslösen von Leistungsschaltern, insbesondere Niederspannungsleistungsschaltern, im Falle eines Kurzschlusses gemäß dem Oberbegriff des Anspruchs 1.

Es ist bekannt, Leistungsschalter in Reihe zu schalten, wobei dem unmittelbar hinter der Stromeinspeisung angeordneten Leistungsschalter lastseitig meist mehrere Leistungsschalter nachgeordnet sind. Weiter ist es bekannt, Leistungsschalter im Falle eines Kurzschlusses selektiv auszulösen. Selektiv bedeutet dabei, dass jeweils der Leistungsschalter auslöst, welcher sich von der Stromeinspeisung aus gesehen am nächsten zum Ort des Kurzschluss befindet, so dass nicht mehr Verbraucher als unvermeidbar von der Abschaltung betroffen sind. Um dies zu erreichen, können die einander vor und nachgeordneten Leistungsschalter einer Strom- und Zeitstaffelung unterworfen werden, wobei die einspeisenahen Leistungsschalter längere Abschaltzeiten als die einspeisefernen aufweisen. Auf diese Weise wird erreicht, dass die vorgeordneten Leistungsschalter nur dann eine Abschaltung vornehmen, wenn sie sich selbst am nächsten zum Kurzschluss befinden oder aber im Falle des Schutzversagens eines nachgeordneten Leistungsschalters, wo ein nachgeordneter Leistungsschalter nicht auslöst, obwohl er auslösen müsste. Bei einer solchen Strom- und Zeitstaffelung werden Leistungsschalter so parametriert, dass diese im Falle eines Kurzschlusses in Einspeiserichtung gesehen bei immer höheren Strömen und nach immer längeren Zeiten auslösen.

Um die dadurch erforderlichen relativ langen Abschaltzeiten zu verkürzen, können die nachgeordneten Leistungsschalter den jeweils vorgeordneten Leistungsschaltern signalisieren, dass sie die Abschaltung vornehmen werden. Dies erfordert aber einen relativ hohen zusätzlichen Schaltungsaufwand.

Um diesen Aufwand zu verringern, wird in der
WO 2006-/108860 A1 vorgeschlagen, dass ein vorgeordneter Leistungsschalter ein oder mehrere nachgeordnete Leistungsschalter überwacht, wobei die Überwachung anhand der abgangsseitigen Impedanz erfolgt. Die Impedanz weist im Falle eines Kurzschlusses einen signifikanten Anstieg auf, wenn einer der nachgeordneten Leistungsschalter dabei ist auszulösen, d.h. seine Schaltkontakte zur Unterbrechung des abgangsseitigen Stromkreises bereits öffnet, was mit der Bildung eines Schaltlichtbogens zwischen den Schaltkontakten verbunden ist. Dieser Schaltlichtbogen bewirkt einen typischen Anstieg der abgangsseitigen Impedanz, welcher vom vorgeordneten Leistungsschalter erfasst wird, der daran erkennen kann, dass ein nachgeordneter Leistungsschalter bereits auslöst und er selbst nicht auslösen muss. Hat der vorgeordnete Leistungsschalter den Öffnungsvorgang seiner Schaltkontakte selbst bereits begonnen, so kann er diese wieder schließen.

Die Aufgabe der Erfindung ist es, ein Verfahren anzugeben, mit dem sich sicher feststellen lässt, ob ein nachgeordneter Leistungsschalter im Falle eines Kurzschlusses bereits dabei ist, den betroffenen Stromkreis abzuschalten.

Die Aufgabe wird durch die Merkmale des Anspruchs 1 gelöst; die Unteransprüche stellen vorteilhafte Ausgestaltungen dar.

Die Lösung sieht vor, dass der vorgeordnete Leistungsschalter zur Feststellung eines abgangsseitigen Schaltlichtbogens im Falle eines Kurzschlusses jeweils prüft, ob der ohmsche Widerstand der durch einen Kurzschluss gebildeten Kurzschlussschleife zeitlich einen exponentiellen Verlauf aufweist, indem fortlaufend ein Exponent berechnet und anhand des berechneten Exponenten der Schaltlichtbogen festgestellt wird, wenn der berechnete Exponent einen vorgegebenen Schwellwert überschreitet. Der Erfindung liegt zugrunde, dass der ohmsche Widerstand einer Kurzschlussschleife aufgrund des Schaltlichtbogens einen exponentiellen Verlauf aufweist und dass sich das Vorhandensein des exponentiellen Verlaufs durch fortlaufende Berechnung des Exponenten feststellen lässt. Die Berechnung erfolgt fortlaufend, sobald ein Kurzschlussstrom detektiert wird (und noch kein Schaltlichtbogen vorhanden ist). Nach Ausbildung des Schaltlichtbogens zwischen den Schaltkontakten springt der so ermittelte Exponent jeweils auf einen Wert, der deutlich über einem vorzugebenden Schwellwert liegt.

Technisch einfach ist es, wenn der Exponent fortlaufend aus dem zeitlichen Verlauf der abgangsseitigen Spannung und dem zeitlichen Verlauf des abgangsseitigen Stroms sowie dessen zeitlicher Ableitung berechnet wird. Dies entspricht einer modellmäßigen Vereinfachung der Zusammenhänge, die durch eine entsprechende Ersatzschaltung beschreibbar ist.

Zweckmäßigerweise wird die zeitliche Ableitung des Stroms direkt gemessen.

Die Genauigkeit lässt sich erhöhen, wenn für die fortlaufende Berechnung des Exponenten der zeitlich konstante Anteil der Induktivität der Kurzschlussschleife berücksichtigt wird.

Vereinfachend ist es, wenn die abgangsseitige Spannung, der abgangsseitige Strom und dessen zeitliche Ableitung fortlaufend mit einer vorgegebenen Frequenz abgetastet und diese Abtastwerte dann fortlaufend in ein der Näherung entsprechendes zugehöriges Gleichungssystem eingesetzt werden, dessen fortlaufende Lösung jeweils der zu berechnende Exponent ist. Die Abtastwerte für einen Zeitpunkt werden jeweils in eine der Gleichungen des Gleichungssystems eingesetzt, bis die Unbekannten des Gleichungssystems in bekannter Weise berechnet werden können. Für ein Gleichungssystem mit drei Unbekannten braucht man also (mindestens) die Abtastwerte zu (unmittelbar aufeinanderfolgenden) drei Zeitpunkten, um das Gleichungssystem zu lösen.

Die Genauigkeit lässt sich bei Verringerung des Rechenaufwands erhöhen, wenn im Kurzschlussfall für die vor dem exponentiellen Verlauf liegenden, Abtastwerte der zeitlich konstante Anteil der Induktivität und des ohmschen Widerstands der Kurzschlussschleife berechnet und die so ermittelte Induktivität und der ohmsche Widerstand zur Korrektur der abgangsseitigen Spannung während des schaltlichtbogenbedingten exponentiellen Verlaufs verwendet wird. Mit Hilfe der Abtastwerte vor dem exponentiellen Verlauf werden also die konstante Induktivität und der konstante Anteil des ohmschen Widerstandes der Kurzschlussschleife ermittelt, um damit die abgangsseitige gemessene Spannung zu korrigieren und so die Genauigkeit des berechneten Exponenten zu erhöhen.

Die Erfindung wird nachfolgend anhand eines Ausführungsbeispiels näher beschrieben. Es zeigen:
- Figur 1: eine schematische Darstellung einer Schaltungsanordnung mit zwei nachgeordneten Leistungsschaltern,
- Figur 2: ein Ersatzschaltbild für die Stromschleife eines nachgeordneten Leistungsschalters gemäß Figur 1,
- Figur 3: die Gleichungen zur Berechnung des Exponenten unter Berücksichtigung der Induktivität und unter Vernachlässigung des konstanten Anoden-Kathodenspannungsfalls,
- Figur 4: die Gleichung zur Berechnung von Induktivität und ohmschem Widerstand außerhalb des exponentiellen Verlaufs,
- Figur 5: die Gleichung zur Korrektur der Spannung der Kurzschlussschleife unter Berücksichtigung der Induktivität und des ohmschen Widerstands gemäß Figur 4,
- Figur 6: eine schematische Darstellung des ohmschen Widerstands über der Zeit und
- Figur 7: eine schematische Darstellung für den Exponenten des zeitlichen Verlaufs des ohmschen Widerstands gemäß Figur 1 mit eingezeichnetem Schwellwert.

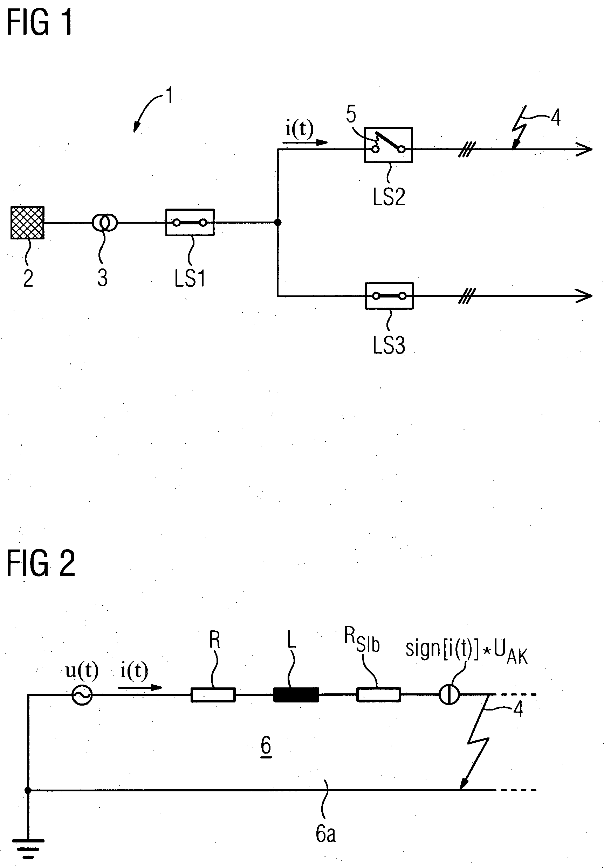

In der Figur 1 ist eine Stromeinspeisung 1 mit einem Stromnetz 2 sowie einem Transformator 3 gezeigt. Figur 1 zeigt weiter einer Schaltungsanordnung mit mehreren Leistungsschaltern, hier mit drei Leistungsschaltern LS1, LS2, LS3, bei denen es sich um Strom begrenzende Niederspannungs-Leistungsschalter handelt, die sehr kurze Abschaltzeiten aufweisen. Der Stromeinspeisung 1 folgt zunächst der (einspeisenahe) Leistungsschalter LS1, der den beiden hier parallel geschalteten Leistungsschaltern LS2, LS3 vorgeordnet ist. Die beiden Leistungsschalter LS2, LS3 sind dem Leistungsschalter LS1 nachgeordnet, jeweils von der Stromeinspeisung 1 aus gesehen. Selbstverständlich könnten die Leistungsschalter LS2, LS3 auch in Reihe hintereinander geschaltet sein.

Der große Pfeil rechts in der Figur 1 zeigt an, dass hinter dem Leistungsschalter LS2 ein Kurzschluss 4 vorliegt, wobei der Leistungsschalter LS2 dem Kurzschluss 4 am nächsten liegt. Die Figur 1 zeigt weiter, dass der Leistungsschalter LS2 (ausgelöst z.B. von einem nicht gezeigten Auslöser) bereits dabei ist zu öffnen. Dabei brennt zwischen den sich öffnenden Schaltkontakte des Leistungsschalters LS2 ein in Figur 1 gezeigter Schaltlichtbogen 5, der bei einer weiteren Öffnung der Schaltkontakte wieder zum Erlöschen gebracht wird. Die geöffneten Schaltkontakte unterbrechen die abgangsseitige Kurzschlussschleife (Kurzschluss-Stromschleife) des abgangsseitigen Stromkreises 6a und trennen den Stromkreis 6a von der Stromeinspeisung 1.

Der vorgeordnete Leistungsschalter LS1 beobachtet (überwacht) in Figur 1 den abgangsseitigen ohmschen Widerstand W der durch den Kurzschluss 4 gebildeten Kurzschlussschleife 6 dahingehend, ob dieser einen zeitlich exponentiellen Verlauf aufweist.

Figur 2 zeigt ein Ersatzschaltbild für die Kurzschlussschleife 6 des vorgeordneten Leistungsschalters LS1 gemäß Figur 1, die durch einen Kurzschluss 4 gebildet ist. Der Schaltlichtbogen 5 ist in der Figur 2 als veränderlicher ohmscher Widerstand Rslb mit einem zeitlich exponentiellen Verlauf dargestellt. Das Ersatzschaltbild der Kurzschlussschleife weist weiter einen zeitlich konstanten ohmschen Widerstand R und eine zeitlich konstante Induktivität L auf, die mit dem Schaltlichtbogen 5 in Reihe geschaltet sind. Der vom vorgeordneten Leistungsschalter LS1 überwachte abgangsseitige ohmsche Widerstand W ergibt sich hier also aus der Summe von ohmschem Widerstand R und ohmschem Widerstand Rslb. Außerdem ist ein konstanter Anoden-Kathoden Spannungsabfall UAK berücksichtigt, der jeweils kurzzeitig unmittelbar nach Öffnen der Schaltkontakte auftritt.

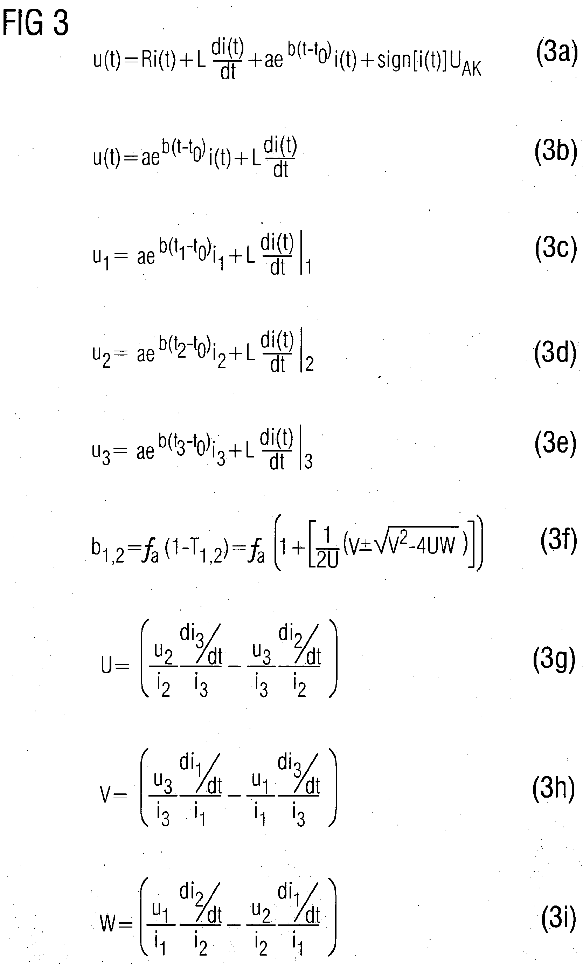

Der zeitliche Verlauf der gemessenen abgangsseitigen Spannung u(t) des Leistungsschalters LS1 ist durch die in Figur 3 dargestellte Gleichung 3a, auch Ansatzspannungsgleichung genannt, gegeben.

Gleichung 3b in Figur 3 entspricht der Gleichung 3a, allerdings lediglich unter Berücksichtigung der Induktivität (der ohmsche Widerstand R und der Anoden-Kathoden Spannungsabfall UAK sind vernachlässigt). Die Gleichung 3b führt bereits zu relativ guten Ergebnissen bei der Berechnung des Exponenten b.

Die Berechnung des Exponenten b erfolgt durch Lösung der drei Gleichungen 3c, 3d, 3e, also durch Lösung eines Gleichungssystems mit drei Unbekannten. Dazu werden die Spannungswerte ui, die Stromwerte ii und die Änderung des Stroms nach der Zeit dii/dt zu drei unmittelbar aufeinanderfolgenden Zeitpunkten ti bestimmt und in die drei Gleichungen eingesetzt. Der Index i (auch der rechts unten in der zeitlichen Ableitung der drei Gleichungen) entspricht der Nummerierung i der drei unmittelbar hintereinander liegenden Zeitpunkte ti. Als Lösung des Gleichungssystems erhält man einen Exponenten b1 und einen Exponenten b2. gemäß der Gleichung 3f. Die Werte U, W und V in Gleichung 3f erhält man aus den Gleichungen 3g, 3h, 3i durch Einsetzen der entsprechenden Spannungswerte ui, Stromwerte ii und der Werte für die zeitlichen Ableitungen des Stroms dii/dt. Von den so erhaltenen fortlaufenden Exponenten b1i und b2i ist nur einer physikalisch sinnvoll; dieser wird mittels einer entsprechenden Logik aussortiert. Der Exponent b ergibt sich dann durch Mittelung des aussortierten Exponenten b1i bzw. b2i.

Die Berechnung erfolgt - da zu jedem neuen Zeitpunkt ein neues (Mess-)Wertetriple (ui+1, ii+1, dii+1/dt) vorliegt - so, dass das zeitlich am weitesten zurückliegende Wertetriple (ui-2, ii-2, dii-2/dt) von den drei zur Berechnung herangezogenen Wertepaaren (ui-2, ii-2, dii-2/dt), (ui-1, ii-1, dii-1/dt), (ui, ii, dii/dt) gestrichen und nur die beiden verbleibenden Wertetriple (ui-1, ii-1, dii-1/dt), (ui, ii, dii/dt) sowie das neue Wertetriple (ui+1, ii+1, dii+1/dt) weiterverwendet werden.

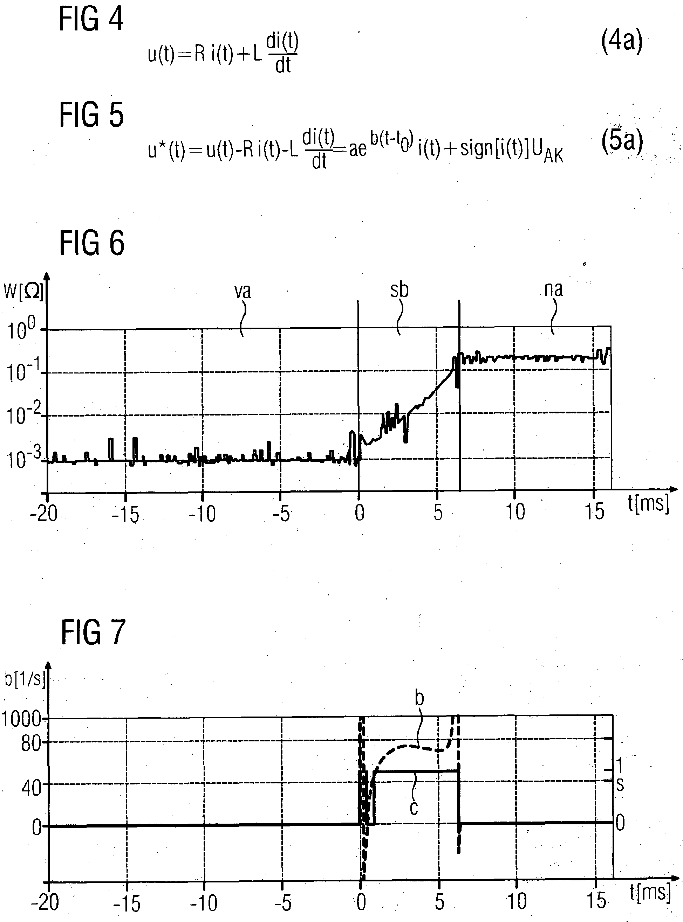

Um die Berechnung zu vereinfachen und nicht jeweils zwischen zwei fortlaufenden Exponenten b1i und b2i entscheiden zu müssen, werden für die Kurzschlussschleife 6 im Kurzschlussfall vor Entstehung eines Schaltlichtbogens 5 die Wertetriple (ui, ii, dii/dt) fortlaufend gemessen und anhand dieser Werte gemäß Gleichung 4a in Figur 4 die zeitlich konstante Induktivität L und der zeitlich konstante ohmsche Widerstand R - z.B. analog wie oben mit den Wertetripeln für ein Gleichungssystem mit drei Unbekannten beschrieben - bestimmt. Eine nachfolgende Glättung ergibt den konstanten Anteil für den ohmschen Widerstand R und die Induktivität L.

Der zeitlich konstante ohmsche Widerstand R und die zeitlich konstante Induktivität L werden gemäß Gleichung 5a in Figur 5 zur Korrektur der gemessenen Spannung u(t) verwendet. Im Gleichungssystem zur Berechnung des Exponenten b treten die beiden Größen Induktivität L und ohmscher Widerstand R dann nicht mehr auf, was die Berechnung des Exponenten b deutlich erleichtert. Insbesondere muss auch nicht mehr zwischen zwei Exponenten b1 und b2 entschieden werden.

Figur 6 zeigt den abgangsseitigen ohmschen Widerstand W (als die Summe aus ohmschem Widerstand R und ohmschem Widerstand Rslb) als Funktion der Zeit im Kurzschlussfall vor (Bereich va), während (Bereich sb) und nach dem Auftreten (Bereich ns) des Schaltlichtbogens 5.

Das Ergebnis der Berechnung des Exponenten b ist in Figur 7 gezeigt, die erkennen lässt, dass es im Bereich des Schaltlichtbogens 5 einen Sprung für den berechneten Exponenten b gibt, wobei dann jeweils ein vorgegebener Schwellwert S überschritten ist. Ein Schaltlichtbogen 5 liegt hier vor bzw. wird hier anhand des Exponenten b sicher erkannt. Die Kurve c stellt das digitale Ausgangssignal dar, welches man durch Vergleich des berechneten Exponenten b mit dem Schwellwert S erhält, wobei die Kurve c hier jeweils von 0 auf 1 springt.

## Patentansprüche

1. Verfahren zum selektiven Auslösen von Leistungsschaltern (LS1, LS2, LS3) im Falle eines Kurzschlusses, bei dem ein vorgeordneter Leistungsschalter (LS1) und abgangsseitig mindestens ein nachgeordneter Leistungsschalter (LS2, LS3) vorgesehen sind,
wobei der vorgeordnete Leistungsschalter (LS1) überwacht, ob der oder einer der nachgeordneten Leistungsschalter (LS2, LS3) bereits unter Bildung eines Schaltlichtbogens (5) dabei ist, seine Schaltkontakte zur Unterbrechung seines abgangsseitigen Stromkreises zu öffnen,
**dadurch gekennzeichnet,**
**dass** der vorgeordnete Leistungsschalter (LS1) zur Feststellung eines abgangsseitigen Schaltlichtbogens (5) jeweils prüft, ob der ohmsche Widerstand (W) der durch einen Kurzschluss (4) gebildeten Kurtschlussschleife (6) zeitlich einen exponentiellen Verlauf aufweist,
indem fortlaufend ein Exponent (b) berechnet und anhand des berechneten Exponenten (b) der Schaltlichtbogen (5) festgestellt wird, wenn der berechnete Exponent (b) einen vorgegebenen Schwellwert (S) überschreitet.

2. Verfahren nach Anspruch 1,
**dadurch gekennzeichnet,**
**dass** der Exponent (b) fortlaufend aus dem zeitlichen Verlauf der abgangsseitigen Spannung (u(t)) und dem zeitlichen Verlauf des abgangsseitigen Stroms (i(t)) sowie dessen zeitlicher Ableitung (di(t)/dt) berechnet wird.

3. Verfahren nach Anspruch 2,
**dadurch gekennzeichnet,**
**dass** die zeitliche Ableitung des Stroms (di(t)/dt) gemessen wird.

4. Verfahren nach Anspruch 3,
**dadurch gekennzeichnet,**
**dass** für die fortlaufende Berechnung des Exponenten (b) der zeitlich konstante Anteil der Induktivität (L) der Kurzschlussschleife berücksichtigt wird.

5. Verfahren nach einem der Ansprüche 1 bis 4,
**dadurch gekennzeichnet,**
**dass** die abgangsseitige Spannung (u(t)) und der abgangsseitige Strom (i(t)) fortlaufend mit einer vorgegebenen Frequenz abgetastet und diese Abtastwerte (ui, ii) dann selbst und deren zeitliche Ableitung (dii/dt) fortlaufend in ein entsprechendes Gleichungssystem (3g, 3h, 3i) eingesetzt werden, dessen fortlaufende Lösung jeweils der zu berechnende Exponent (b) ist.

6. Verfahren nach einem der Ansprüche 1 bis 5,
**dadurch gekennzeichnet,**
**dass** für die fortlaufende Berechnung des Exponenten (b) eine korrigierte abgangsseitige Spannung (u*(t)) verwendet wird, wobei die Korrektur die zeitlich konstanten Anteile der Induktivität (L) und des ohmschen Widerstands (R) der Kurzschlussschleife in den Zeitbereichen berücksichtigt, in denen der Exponent (b) unterhalb des Schwellwerts (S) liegt.

7. Verfahren nach Anspruch 6,
**dadurch gekennzeichnet,**
**dass** für die vor dem exponentiellen Verlauf liegenden Abtastwerte der zeitlich konstante Anteil der Induktivität (L) und des ohmschen Widerstands (R) der Kurzschlussschleife berechnet und zur Korrektur der abgangsseitigen Spannung (u(t)) während des exponentiellen Verlaufs aufgrund des Schaltlichtbogens (5) verwendet wird.

## Claims

1. Method for selective tripping of circuit breakers (LS1, LS2, LS3) in the event of a short, in which an upstream circuit breaker (LS1) and, on the output side, at least one downstream circuit breaker (LS2, LS3) are provided,
wherein the upstream circuit breaker (LS1) monitors whether the or one of the downstream circuit breakers (LS2, LS3) is in this case already forming a switching arc (5), in order to open its switching contacts in order to interrupt its circuit on the output side,
**characterized**
**in that**, in order to detect a switching arc (5) on the output side, the upstream circuit breaker (LS1) in each case checks whether the resistance (W) of the short-circuit loop (6) formed by a short (4) has an exponential profile over time,
**in that** an exponent (b) is continuously calculated, and the switching arc (5) is detected on the basis of the calculated exponent (b) when the calculated exponent (b) exceeds a predetermined threshold value (S).

2. Method according to Claim 1,
**characterized**
**in that** the exponent (b) is calculated continuously from the time profile of the output-side voltage (u(t)) and the time profile of the output-side current (i(t)) and its derivative with respect to time (di(t)/dt).

3. Method according to Claim 2,
**characterized**
**in that** the derivative with respect to time of the current (di(t)/dt) is measured.

4. Method according to Claim 3,
**characterized**
**in that**, that component of the inductance (L) of the short-circuit loop which is constant over time is taken into account for the continuous calculation of the exponent (b).

5. Method according to one of Claims 1 to 4,
**characterized**
**in that** the output-side voltage (u(t)) and the output-side current (i(t)) are continuously sampled at a predetermined frequency, and these sample values (ui, ii) themselves and their derivative with respect to time (dii/dt) are then continuously inserted into an appropriate equation system (3g, 3h, 3i), whose continuous solution is in each case the exponent (b) to be calculated.

6. Method according to one of Claims 1 to 5,
**characterized**
**in that** a corrected output-side voltage (u*(t)) is used for the continuous calculation of the exponent (b), wherein the correction takes account of those components of the inductance (L) and of the resistance (R) of the short-circuit loop which are constant over time, in the time periods in which the exponent (b) is below the threshold value (S).

7. Method according to Claim 6,
**characterized**
**in that**, that component of the inductance (L) and of the resistance (R) of the short-circuit loop which is constant over time is calculated for the sample values occurring before the exponential profile, and is used to correct the output-side voltage (u(t)) during the exponential profile as a result of the switching arc (5).

## Revendications

1. Procédé de déclenchement sélectif de disjoncteurs (LS1, LS2, LS3) en cas de court-circuit, dans lequel il est prévu un disjoncteur amont (LS1) et côté sortie au moins un disjoncteur aval (LS2, LS3),
dans lequel le disjoncteur amont (LS1) surveille si le ou un des disjoncteurs aval (LS2, LS3) est déjà en train, avec formation d'un arc de déclenchement (5), d'ouvrir ses contacts pour l'interruption de son circuit côté sortie,
**caractérisé en ce que** le disjoncteur amont (LS1) vérifie à chaque fois, pour constater la présence d'un arc de déclenchement côté sortie (5), si la résistance ohmique (W) de la boucle de court-circuit (6) formée par un court-circuit (4) présente temporellement une allure exponentielle,
par le fait que l'on calcule en continu un exposant (b) et que l'on constate, à l'aide de l'exposant (b) calculé, la présence de l'arc de déclenchement (5) lorsque l'exposant calculé (b) dépasse une valeur de seuil prédéterminée (S).

2. Procédé selon la revendication 1, **caractérisé en ce que** l'on calcule l'exposant (b) en continu à partir de l'allure temporelle de la tension de sortie (u(t)) et de l'allure temporelle du courant de sortie (i(t)) ainsi que de sa dérivée temporelle (di(t)/dt).

3. Procédé selon la revendication 2, **caractérisé en ce que** l'on mesure la dérivée temporelle du courant (di(t)/dt).

4. Procédé selon la revendication 3, **caractérisé en ce que**, pour le calcul continu de l'exposant (b), on tient compte de la partie temporellement constante de l'inductance (L) de la boucle de court-circuit.

5. Procédé selon l'une quelconque des revendications 1 à 4, **caractérisé en ce que** l'on analyse en continu avec une fréquence prédéterminée la tension de sortie (u(t)) et le courant de sortie (i(t)) et on utilise alors ces valeurs d'analyse (ui, ii) elles-mêmes et leur dérivée temporelle (dii/dt) en continu dans un système d'équations correspondant (3g, 3h, 3i), dont la solution continue est respectivement l'exposant (b) à calculer.

6. Procédé selon l'une quelconque des revendications 1 à 5, **caractérisé en ce que** l'on utilise, pour le calcul continu de l'exposant (b), une tension de sortie corrigée (u*(t)), dans lequel la correction tient compte des parties temporellement constantes de l'inductance (L) et de la résistance ohmique (R) de la boucle de court-circuit dans les plages temporelles dans lesquelles l'exposant (b) se situe en dessous de la valeur de seuil (S).

7. Procédé selon la revendication 6, **caractérisé en ce que**, pour les valeurs d'analyse situées avant l'allure exponentielle, on calcule la partie temporellement constante de l'inductance (L) et de la résistance ohmique (R) de la boucle de court-circuit et on l'utilise pour la correction de la tension de sortie (u(t)) pendant l'allure exponentielle due à l'arc de déclenchement (5).
